(19) Europäisches Patentamt
European Patent Office
Office européen des brevets

(11) EP 2 868 367 A1

(12) EUROPEAN PATENT APPLICATION
published in accordance with Art. 153(4) EPC

(43) Date of publication:
06.05.2015 Bulletin 2015/19

(51) Int Cl.:
B01D 69/08 (2006.01)    B01D 69/10 (2006.01)
B01D 69/12 (2006.01)    B01D 71/34 (2006.01)
B01D 71/48 (2006.01)    B32B 1/08 (2006.01)
B32B 5/24 (2006.01)

(21) Application number: 13809267.1

(22) Date of filing: 27.06.2013

(86) International application number:
PCT/JP2013/067679

(87) International publication number:
WO 2014/003130 (03.01.2014 Gazette 2014/01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 29.06.2012 JP 2012147478

(71) Applicant: Mitsubishi Rayon Co., Ltd.
Tokyo 100-8253 (JP)

(72) Inventors:
• TAKAHASHI, Shusaku
  Toyohashi-shi, Aichi 440-8601 (JP)
• OOBA, Takahito
  Toyohashi-shi, Aichi 440-8601 (JP)
• TERAMACHI, Masashi
  Toyohashi-shi, Aichi 440-8601 (JP)

(74) Representative: Hoffmann Eitle
Patent- und Rechtsanwälte PartmbB
Arabellastraße 30
81925 München (DE)

(54) HOLLOW POROUS MEMBRANE

(57) The present invention relates to a hollow porous membrane comprising a porous membrane layer and a support, wherein the porous membrane layer is composed of a thermoplastic resin and the support is a support obtained by processing a yarn having a stretch elongation rate of 1.0% or less into a tubular shape. According to the present invention, it is possible to provide a hollow porous membrane capable of maintaining sufficient physical strength and favorable water permeability despite its small outer diameter value.

FIG. 1

EP 2 868 367 A1

**Description**

TECHNICAL FIELD

The present invention relates to a hollow porous membrane which is suitably used in the water treatment.
This application is based upon and claims the benefit of priority of the prior Japanese Patent Application No. 2012-147478, filed on June 29, 2012, the entire contents of which are incorporated herein by reference.

BACKGROUND ART

In recent years, the water treatment using a membrane filter which is excellent in completeness of separation and compactness has attracted attention since interest in environmental problems has increased and also the regulations on water quality have been tightened. As the membrane filter, for example, a hollow porous membrane is employed in a variety of water treatment such as the sewage and wastewater treatment or the water purification treatment. In such a water treatment application, the hollow porous membrane is required to exhibit excellent separation properties or water permeability and high mechanical strength.
Hitherto, a membrane filter which is made of polysulfone, polyacrylonitrile, cellulose acetate, polyvinylidene fluoride or the like and produced by the wet or dry-wet spinning method is known as the membrane filter excellent in water permeability. These membrane filters are produced by subjecting a polymer solution to the microphase separation and then coagulating the polymer solution in a nonsolvent and have a high porosity and an asymmetric structure. Among the membrane filter materials, the polyvinylidene fluoride resin is suitably used as a material of the separation membrane due to its excellent chemical resistance and heat resistance.
In a case in which the hollow porous membrane is applied to the water treatment field, the produced membrane filter is integrated to have a predetermined membrane area and used as a membrane module. In this case, it is possible to achieve a greater membrane area by a module having the same shape when the outer diameter value of the hollow porous membrane is small. However, there is a problem that the resistance of water flowing through the hollow portion increases at the time of water permeation and thus the water permeability decreases at the time of making it into a module since the inner diameter value of the hollow porous membrane concomitantly decreases as the outer diameter value thereof decreases. In addition, there is also a problem that the hollow porous membrane is fractured while being continuously used and thus the water treatment capacity decreases since a single hollow porous membrane is significantly thin and has a low mechanical strength.
As a hollow porous membrane excellent in mechanical properties, a hollow porous membrane is disclosed in Patent Document 1 which is obtained by knitting a polyester multifilament into a tubular shape is used as a support and a membrane solution is coated on this support and coagulated. However, the hollow porous membrane disclosed in the above document has an outer diameter value of about 2.8 mm. Hence, it is considerable that the problem described above, that is, a decrease in the mechanical strength and water treatment capacity occurs in a case in which the outer diameter value of the hollow porous membrane is smaller. On the other hand, a hollow porous membrane is disclosed in Patent Document 2 in which a tubular braid composed of a glass fiber is utilized as a support. In the hollow porous membrane disclosed in Patent Document 2, it is possible to suppress the resistance at the time of water permeation while exhibiting a favorable fracture stress by reducing the amount of glass fiber used even in the case of having a small outer diameter value. However, the glass fiber is highly rigid and thus there is a problem that effective nonrigidity for physical cleaning at the time of the water treatment is low. In addition, there is a problem that the production efficiency of the braid support is low, furthermore, the braid itself exhibits elasticity and thus the outer diameter is changed by the tension applied during the porous membrane forming process.
In contrast, a technique is disclosed in Patent Document 3 in which a polyvinylidene fluoride having a high melt viscosity is produced by the thermally induced phase separation method and thus the fracture stress of the hollow porous membrane can be increased even in a case in which the outer diameter value of the hollow porous membrane is small. However, the improvement in the fracture stress of the hollow porous membrane is not sufficient as the fracture stress of the hollow porous membrane produced using the above technique is a value of about one 10th to 60th of the fracture stress of the hollow porous membranes proposed in Patent Documents 1 and 2. As described above, the membrane filter which is composed of a polyvinylidene fluoride hollow fiber membrane and described in Patent Documents 1 to 3 above has a problem that any of the outer diameter, water permeability, and mechanical strength thereof is not sufficient.

CITATION LIST

PATENT DOCUMENT

Patent Document 1: WO 2009/142279 A
Patent Document 2: JP 2007-83239 A
Patent Document 3: JP 2011-36848 A

SUMMARY OF THE INVENTION

PROBLEM TO BE SOLVED BY THE INVENTION

The invention is made in view of the above circumstances, and an object thereof is to provide a hollow porous membrane capable of maintaining sufficient physical strength and favorable water permeability despite its small outer diameter value.

MEANS FOR SOLVING PROBLEM

The invention has the following aspects.

[1] A hollow porous membrane having a porous membrane layer and a support, in which the porous membrane layer is composed of a thermoplastic resin and the support is a support obtained by processing a yarn having a stretch elongation rate of 1.0% or less into a tubular shape;
[2] The hollow porous membrane according to [1], in which an outer diameter value of the hollow porous membrane is 1.2 mm or more and 2.0 mm or less;
[3] The hollow porous membrane according to [1] or [2], in which a diameter ratio (inner diameter value/outer diameter value) of the hollow porous membrane is 0.5 or more and 0.9 or less;
[4] The hollow porous membrane according to any one of [1] to [3], in which a tensile fracture strength of the hollow porous membrane is 50 N/fil or more;
[5] The hollow porous membrane according to any one of [1] to [4], in which a tensile fracture stress of the hollow porous membrane is 50 MPa or more;
[6] The hollow porous membrane according to any one of [1] to [5], in which the yarn is a multifilament;
[7] The hollow porous membrane according to any one of [1] to [6], in which the yarn is a polyester fiber;
[8] The hollow porous membrane according to any one of [1] to [7], in which a fineness of the yarn is from 56 to 333 dtex;
[9] The hollow porous membrane according to any one of [1] to [8], in which the support is a cylindrical braid support formed by knitting the yarn into a tubular shape and further heat treating the yarn knitted into a tubular shape;
[10] The hollow porous membrane according to [9], in which an inner diameter of the cylindrical braid support is 0.6 mm or more;
[11] The hollow porous membrane according to any one of [1] to [10], in which the thermoplastic resin is polyvinylidene fluoride;
[12] The hollow porous membrane according to [11], in which a mass average molecular weight of the polyvinylidene fluoride is from $2.0 \times 10^5$ or more and $1.2 \times 10^6$ or less;
[13] The hollow porous membrane according to [12], in which two or more layers of the porous membrane layer are laminated on the support;
[14] The hollow porous membrane according to [12], in which the polyvinylidene fluoride is a mixture of two or more kinds of polyvinylidene fluoride having different mass average molecular weights and the porous membrane layer contains the mixture;
[15] The hollow porous membrane according to [1], in which a stretch elongation rate of the yarn is 0.7% or less; and
[16] The hollow porous membrane according to [1], in which a stretch elongation rate of the yarn is 0.4% or less.

EFFECT OF THE INVENTION

The hollow porous membrane of the invention exhibits sufficient physical strength and favorable water permeability although the outer diameter value thereof is small and thus can be applied to a module having a long effective length, and furthermore a module including the hollow porous membrane of the invention can be highly integrated.

BRIEF DESCRIPTION OF DRAWINGS

Fig. 1 is a schematic cross-sectional diagram illustrating an example of the hollow porous membrane of the invention;
Fig. 2 is a transverse cross-sectional diagram illustrating an example of the support obtained by processing a fiber into a tubular shape;

Fig. 3 is a schematic block diagram illustrating an example of a hollow porous membrane producing apparatus; and

Fig. 4 is a schematic block diagram illustrating an example of a support producing apparatus.

MODE(S) FOR CARRYING OUT THE INVENTION

Hereinafter, the invention will be described in detail.

<Hollow porous membrane>

The hollow porous membrane of the invention has a porous membrane layer and a support, and the porous membrane layer is composed of a thermoplastic resin and the support is a support obtained by processing a yarn having a stretch elongation rate of 1.0% or less into a tubular shape.

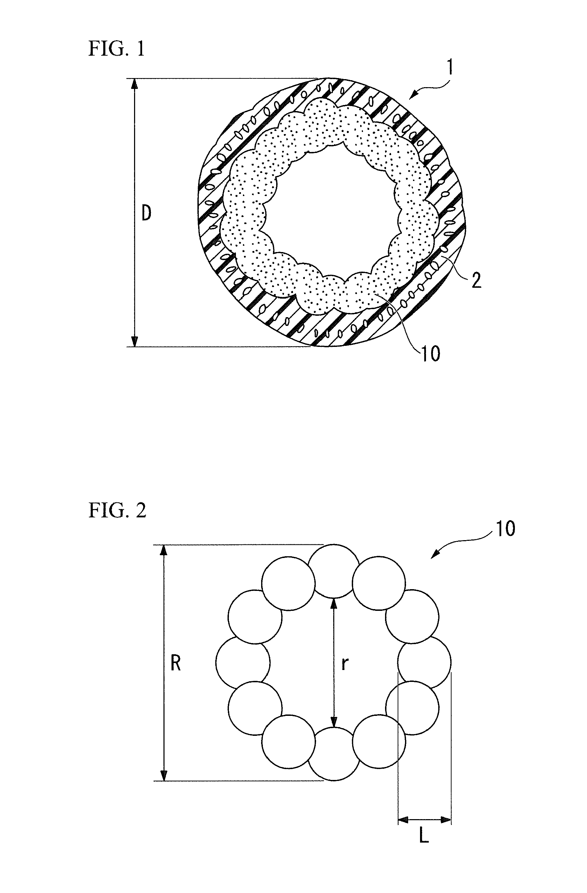

In other words, the hollow porous membrane of the invention has a support 10 and a porous membrane layer 2 provided on the outer circumferential surface of the support 10 as illustrated in Fig. 1. Here, Fig. 1 is a schematic cross-sectional diagram illustrating an example of the hollow porous membrane of the invention.

The outer diameter of the hollow porous membrane of the invention is 1.0 mm or more and 2.0 mm or less from the viewpoint of the required filtration area which is required in the membrane module constituted using a plurality of hollow porous membranes. Among these, it is more preferably from 1.2 to 2.0 mm and most preferably from 1.3 to 1.8 mm. Here, the outer diameter value of the hollow porous membrane refers to the outer diameter D illustrated in Fig. 1. In other words, the "outer diameter value of hollow porous membrane" in the present specification refers to the length of the straight line drawn from one side of the substantially circular shape to the other side so as to pass through the center portion in the cross section of the hollow porous membrane having a substantially circular shape. In the actual measurement, a flake is cut out from a sample of the hollow porous membrane, the cross section of the cut flake is projected on the screen using a projector, the outer diameter of the hollow porous membrane is randomly measured from the projected image at least at three locations, and the average value thereof is adopted as the outer diameter D.

The outer diameter value of the hollow porous membrane is as small as from 1.0 to 2.0 mm in the hollow porous membrane of the invention and thus the module including the hollow porous membrane of the invention can be highly integrated.

The packing quantity of membrane in the membrane module including the hollow porous membrane of the invention is preferably from 30 to 85 $m^2$ and more preferably from 35 to 70 $m^2$.

Here, the packing quantity of membrane refers to the surface area of the membrane excluding the portion sealed with a resin when the hollow porous membrane is housed as many as the cross-sectional area of the packed membranes is 50% with respect to the cross-sectional area of the case and integrated. Hence, the high integration of the module, that is, the packing quantity of membrane can be increased when the outer diameter value of the hollow porous membrane is smaller in a case in which the membrane modules having the same shape are compared with one another.

In the hollow porous membrane of the invention, it is required to increase the packing rate (a value representing the packing density of membrane) in order to achieve the desired packing quantity of membrane in a case in which the outer diameter value of the hollow porous membrane is greater than 2.0 mm, and thus the distance between the hollow porous membranes decreases and washability by aeration and the like deteriorates during operation, therefore it is not preferable.

Here, the aeration refers to a method of cleaning and removing the clogging components deposited on the membrane surface by shaking the hollow porous membrane. There is a case in which the membrane is fractured by the load at the time of this aeration when performing the water treatment using a hollow porous membrane, the clogging components run into the treated water, and thus the quality of the treated water is deteriorated. Consequently, the tensile fracture strength per hollow porous membrane of the invention is preferably 50 N/fil or more. When the tensile fracture strength per hollow porous membrane is 50 N/fil or more, the fracture of the membrane at the time of aeration can be suppressed, and thus preferable. On the other hand, when the tensile fracture strength per hollow porous membrane is less than 50 N/fil, there is a possibility that the fracture of the membrane occurs at the time of aeration.

The tensile fracture strength per hollow porous membrane of the invention is even more preferably 70 N/fil or more. In addition, the upper limit of the tensile fracture strength is not particularly limited as long as the effect of the invention is exhibited, but it is preferably 500 N/fil or less from the viewpoint of manufacturing method or cost in a case in which the porous membrane layer is a hollow porous membrane composed of a thermoplastic resin. In other words, the fracture strength per hollow porous membrane of the invention is preferably from 50 to 500 N/fil and more preferably from 70 to 500 N/fil. Here, the "N/fil" refers to the strength which is required to fracture one (1 filter) hollow porous membrane and expressed by newton (N).

In addition, the load at the time of aeration varies depending on the outer diameter value of the hollow porous membrane. For this reason, the value of the tensile fracture stress is preferably 50 MPa or more and more preferably 70 MPa or more in the case of considering as the tensile fracture stress which reflects the value of the cross-sectional area of the hollow porous membrane. In addition, the upper limit value of the tensile fracture stress is not particularly limited as long as the effect of the invention is exhibited in the same manner as the tensile fracture strength, but it is preferably 200 MPa or less from the viewpoint of the manufacturing method or cost. In other words, the tensile fracture stress of the hollow porous membrane of the invention is preferably from 50 to 200 MPa and more preferably from 70 to 200 MPa.

Here, the "tensile fracture strength per hollow porous membrane" refers to the value measured using a Tensilon type tensile tester. Specifically, one hollow porous membrane is gripped by the chuck portion of the tester such that a length of the membrane is 10 cm, the membrane is extended in this state at a rate of 100 mm/min, and the load (N) when the hollow porous membrane is fractured is measured. This measurement is performed 5 times, and the average value thereof is adopted as the tensile fracture strength per hollow porous membrane of the invention. In addition, the "tensile fracture stress of hollow porous membrane" refers to the value (MPa) obtained by dividing the tensile fracture strength determined by the above method by the cross-sectional area of the hollow porous membrane.

The porous membrane layer of the hollow porous membrane of the invention is composed of a thermoplastic resin. Examples of the thermoplastic resin may include polyvinylidene fluoride, polysulfone, polyacrylonitrile, polyvinylpyrrolidone, and polyethylene glycol, and polyvinylidene fluoride or a combination of polyvinylidene fluoride with polyvinylpyrrolidone is preferable from the viewpoint of chemical resistance, heat resistance, and the like.

The mass average molecular weight (Mw) of polyvinylidene fluoride is preferably in the range of from $2.0 \times 10^5$ to $1.2 \times 10^6$. It is possible to easily obtain a hollow porous membrane having the desired shape since formativeness is favorable when the mass average molecular weight is in this range. In addition, the polyvinylidene fluoride may be a mixture of two or more kinds of polyvinylidene fluoride having different mass average molecular weights (Mw). For example, in a case in which a polyvinylidene fluoride (1) (mass average molecular weight of $(Mw)_1$) and a polyvinylidene fluoride (2) (mass average molecular weight of $(Mw)_2$) are mixed in a mass ratio of $w_1 : w_2$ (provided that, $w_1 + w_2 = 1$) and this mixture is used as the polyvinylidene fluoride (a), the mass average molecular weight Mw of the polyvinylidene fluoride (a) is determined by the following Equation (1) described in the "The society of Rheology, Japan, Vol. 28 (2000), No.3 p. 99-103".
[Math. 1]

$$Mw = w_1(Mw)_1 + w_2(Mw)_2 \cdots (1)$$

In addition, the porous membrane layer may be formed of the mixture. In one aspect of the invention, in a case in which the porous membrane layer is formed of the mixture, the mass average molecular weight of the mixture is preferably in the above described preferred range, that is, the range of from $2.0 \times 10^5$ to $1.2 \times 10^6$. Here, the "mass average molecular weight" refers to the value determined in terms of polystyrene using gel permeation chromatography (GPC).

In addition, the porous membrane layer may be a single layer or a composite porous membrane layer of two or more layers. It is preferable that the porous membrane be a composite porous membrane layer of two or more layers since the outer diameter value of the hollow porous membrane can be easily controlled. In addition, the number of the layers is preferably four layers or less and more preferably three layers or less from the viewpoint that the manufacturing process is extended and complicated as the number of layers increases in a case in which the porous membrane layer is a composite porous membrane layer. In other words, in one aspect of the invention, the hollow porous membrane layer has preferably from one to four porous membrane layers and more preferably a composite porous membrane layer of two or three layers.

In addition, the thickness of the porous membrane layer is preferably from 30 to 200 μm and more preferably from 50 to 150 μm from the viewpoint of the physical strength and water permeability of the hollow porous membrane. Here, the "thickness of porous membrane layer" means the value obtained by subtracting the outer diameter value of the support to be described below from the outer diameter value of the hollow porous membrane described above.

The hollow porous membrane of the invention has a support. The strength against the fracture of the membrane at the time of aeration is improved when the hollow porous membrane has a support and a porous membrane layer, and thus it is possible to further lower the risk of fracture at the time of using it in the water treatment.

Moreover, a support obtained by processing a yarn having a stretch elongation rate of 1.0% or less into a tubular shape is used as the support. Here, the "stretch elongation rate" refers to the value measured in accordance with the "JIS L 1013 8.11 elasticity C method". In other words, a support having the test length of 20 cm is prepared, the length of the support is measured when a constant load (8.82 mN × 20 × tex number of filament) is applied thereto, the load is then removed, and the length of the support is measured. The stretch elongation rate refers to the proportion obtained by dividing the length of the support when this load is applied by the length of the support when the constant load is removed. The yarn having a stretch elongation rate of 1.0% or less also refers to a non-crimped yarn (hereinafter, a yarn having a stretch elongation rate of 1.0% or less is referred to the non-crimped yarn in some cases) which is not subjected to the so-called crimping process as to be described below. In addition, a yarn having a stretch elongation rate of more than 1.0% refers to a crimped yarn which is subjected to the crimping process.

In the case of using a yarn subjected to the crimping process as a support of the hollow porous membrane, since the yarn itself exhibits elasticity, the yarn itself exhibits elasticity, and thus it is possible to obtain an effect that the tension management is relatively easy during braiding into a tubular. On the other hand, for a non-crimped yarn, that is, the yarn having a stretch elongation rate of 1.0% or less, the yarn itself does not exhibit elasticity, and thus there is a problem that the tension management is difficult during braiding into a tubular shape; however, such a strict tension management is not required in the hollow porous membrane of the invention having an outer diameter value of the hollow porous membrane of from 1.0 to 2.0 mm since it is possible to select a yarn having a small fineness and to have a small number of doubling. For this reason, it is possible to use a yarn having a stretch elongation rate of 1.0% or less in the support of the hollow porous membrane of the invention.

As the form of the crimping process, there are various forms such as a method in which an original yarn is brought into contact with a friction disk and twisted or a method in which the original yarn is wound onto a rotor and the rotor is rotated at a high speed so as to be false-twisted. However, the bulk of the yarn after the crimping process increases in any case of using the above methods. For this reason, in the case of using a support obtained by processing a crimped yarn into a tubular shape, the concavity and convexity on the inner wall of the tube increases due to its bulkiness, the pressure loss increases when treated water flows through the inner side of the support, and the resistance at the time of water permeation increases so as to be a factor of a decrease in flow rate.

On the other hand, in the case of using a support obtained by processing a non-crimped yarn into a tubular shape, it is possible to suppress a decrease in flow rate due to the pressure loss when the treated water flows through the inner side of the support since the non-crimped yarn has smaller bulk compared with the crimped yarn. The value of the water permeability by module which does not have any problem for practical use can be realized by the hollow porous membrane having such a support obtained by processing a non-crimped yarn into a tubular shape. For this reason, it is preferable to use a non-crimped yarn which is not subjected to the crimping process in the support of the invention. In addition, the stretch elongation rate of the yarn is more preferably 0.7% or less and particularly preferably 0.4% or less. In addition, the lower limit value of the stretch elongation rate of the yarn is not particularly limited as long as the effect of the invention is exhibited, but it is preferably 0.05% or more and more preferably 0.1% or more from the viewpoint of ease of processing. In other words, the stretch elongation rate of the yarn used in the support of the invention is preferably from 0.05 to 1.0%, more preferably from 0.1 to 0.7%, and particularly preferably from 0.1 to 0.4%.

Here, the water permeability by module is the value measured by the membrane length when performing the modularization and refers to the water permeability obtained in consideration of the pressure loss of inner diameter that occurs when the filtered water flows through the hollow portion of the hollow porous membrane, the viscosity of the liquid and the like.

In general, the water permeability of the hollow porous membrane can be classified into basic water permeability and water permeability by module. The basic water permeability is the water permeability of the membrane itself derived from the structure of membrane such as the pore size or rate of hole area, porosity, and thickness of the membrane. Here, the "rate of hole area" means the proportion of the area occupied by the pores on the outer surface of the porous membrane, and the "porosity" means the proportion of the volume occupied by the pores in the porous membrane. On the other hand, the water permeability by module is a value which greatly varies depending on the membrane length of the module or the inner diameter value of the hollow portion of the hollow porous membrane. Specifically, the membrane in which the membrane length of the module is longer and the inner diameter value of the hollow portion of the hollow porous membrane is smaller exhibits a greater pressure loss of inner diameter compared with the membrane in which the membrane length of the module is shorter and the inner diameter value of the hollow portion of the hollow porous membrane is greater. For this reason, the value of the water permeability by module greatly decreases from the value of the basic water permeability. Consequently, it is important that the value of the water permeability by module is a sufficient value for practical use with regard to the water permeability of the hollow porous membrane.

With regard to the water permeability by module of the hollow porous membrane of the invention, the water permeability is preferably 2.0 $m^3/m^2/hr/MPa$ or more and more preferably 3.0 $m^3/m^2/hr/MPa$ or more when the membrane length of the module is 165 cm. The upper limit value of the water permeability by module is not particularly limited as long as the effect of the invention is exhibited, but it is desirably 30.0 $m^3/m^2/hr/MPa$ or less in terms of the balance with the fractionation performance. When the water permeability by module is in the range of 2.0 to 30 $m^3/m^2/hr/MPa$, stable operation is possible during actual operation.

Here, the "water permeability of hollow porous membrane" refers to the value obtained by dividing the amount of water discharged from the hollow porous membrane by the surface area of the hollow porous membrane and further converting the resultant value to per 1 MPa at 25°C. Specifically, a sample of the hollow porous membrane is cut to be 165 cm, the pores of the hollow porous membrane are filled with ethanol, and the ethanol is then replaced with pure water. Thereafter, one end of the sample is introduced into a container containing pure water at 25°C, the pressure is reduced at the other end by a pump, and the amount of pure water discharged from the sample is measured for one minute, thereby determining the water permeability of hollow porous membrane.

The hollow porous membrane of the invention has a support obtained by processing a non-crimped yarn into a tubular shape, and examples of the method of processing a non-crimped yarn into a tubular shape may include various methods such as a braid form in which a single yarn is circular knitted into a cylindrical shape, a method to impart rigidity to the braid which is circular knitted into a cylindrical shape by the heat treatment, and a braid form in which a plurality of yarns are assembled into a cylindrical shape. Among these methods, a form in which the braid which is circular knitted into a cylindrical shape is subjected to the heat treatment is preferable in terms that the productivity is favorable and elasticity and rigidity adequate to form a membrane are exhibited. Meanwhile, the circular knitting is to knit the tubular weft knitted fabric using a circular knitting machine, and the braid formed by circular knitting a yarn into a cylindrical shape is the one obtained by bending a yarn so as to form a continuous loop extending helically and relating these loops with one another in front to back and from side to side.

Examples of the material of the yarn having a stretch elongation rate of 1.0% or less may include a synthetic fiber, a semi-synthetic fiber, a regenerated fiber, and a natural fiber. In addition, the yarn having a stretch elongation rate of 1.0% or less may be a combination of plural kinds of fibers.

Examples of the synthetic fiber may include: a polyamide-based fiber such as nylon 6, nylon 66, and an aromatic polyamide; a polyester-based fiber such as polyethylene terephthalate, polybutylene terephthalate, polylactic acid, and polyglycolic acid; an acrylic fiber such as polyacrylonitrile; a polyolefin-based fiber such as polyethylene and polypropylene; a polyvinyl alcohol-based fiber; a polyvinylidene chloride-based fiber; a polyvinyl chloride-based fiber; a polyurethane-based fiber; a phenolic resin-based fiber; a fluorine-based fiber such as polyvinylidene fluoride and polytetrafluoroethylene; and a polyalkylene paraoxybenzoate-based fiber.

Examples of the semisynthetic fiber may include a cellulose derivative-based fiber using cellulose diacetate, cellulose triacetate, chitin, and chitosan as a raw material, and a protein-based fiber referred to as promix.

Examples of the regenerated fiber may include a cellulose-based regenerated fiber (rayon, cupra, polynosic, and the like) which is obtained by a viscose process, the cuprammonium process, or an organic solvent process. Examples of the natural fiber may include flax and jute.

Among these, one or more kinds of fibers selected from the group consisting of a polyester-based fiber, an acrylic fiber, a polyvinyl alcohol-based fiber, a polyamide-based fiber, and a polyolefin-based fiber are preferable from the viewpoint of exhibiting excellent chemical resistance, and a polyester fiber (PET) is particularly preferable in terms of exhibiting excellent resistance to a hypochlorite (for example, sodium hypochlorite) used in the cleaning of the hollow porous membrane.

Examples of the form of the yarn having a stretch elongation rate of 1.0% or less may include a monofilament, a multifilament, and a spun yarn, and a multifilament is preferable as the form of the yarn having a stretch elongation rate of 1.0% or less of the invention.

Here, the multifilament refers to a structure formed by twisting from several to several tens of fibers. It is preferable that the form of the yarn having a stretch elongation rate of 1.0% or less be a multifilament since it is easy to control the outer diameter value of the hollow porous membrane in the range of from 1.0 to 2.0 mm.

The fineness of the yarn having a stretch elongation rate of 1.0% or less can be determined by taking the outer diameter value and inner diameter value of the support and the thickness of the support into consideration. Among these, it is preferable to use a yarn having from 56 to 333 dtex and it is even more preferable to use a yarn having from 111 to 222 dtex in the support of the invention. It is preferable that the fineness of the yarn having a stretch elongation rate of 1.0% or less be from 56 to 333 dtex since it is easy to control the outer diameter value of the hollow porous membrane in from 1.0 to 2.0 mm.

Here, the outer diameter value of the support refers to the outer diameter R illustrated in Fig. 2. Fig. 2 is a transverse cross-sectional diagram illustrating an example of the support 10 of the invention.

The outer diameter R refers to the length of the part where the outer diameter of the support 10 is the greatest. In other words, there are concavity and convexity on the outer circumferential surface of the support 10, the convex parts are connected with one another so as to pass through the center of the support 10, and the length thereof is adopted as the outer diameter R. In other words, in the present specification, the outer diameter R refers to the length of the straight line which is drawn from one convex part of the cross section of the support having the concavity and convexity to the other convex part so as pass through the center portion of the hollow porous membrane in the cross section of the hollow porous membrane having a substantially circular shape. In the actual measurement, a flake is cut out from a sample of the hollow porous membrane, the cross section of the cut flake is projected on the screen using a projector, the outer diameter of the support is randomly measured from the projected image at least at three locations, and the average value thereof is adopted as the outer diameter R.

The outer diameter of the support 10 of the present invention is preferably from 0.8 to 1.8 mm and more preferably from 1.0 to 1.7 mm. The membrane area with respect to the packing quantity of membrane is reduced in a case in which the hollow porous membrane of the invention including the support is made into a membrane module when the outer diameter value is greater than 1.8 mm, and thus it is impossible to secure the required membrane area. On the other hand, it is not preferable that the outer diameter value be smaller than 0.8 mm since the inner diameter value becomes small and thus the flow rate decrease due to the pressure loss caused when the treated water flows through the inner side of the support. It is preferable that the outer diameter of the support 10 be from 0.8 to 1.8 mm since the water permeability is not impaired and it is possible to secure the membrane area required when the hollow porous membrane of the invention including the support is made into a membrane module.

In addition, the inner diameter value of the support refers to the inner diameter r illustrated in Fig. 2. The inner diameter r refers to the value obtained by subtracting the value (2L) obtained by multiplying the thickness L of the support 10 by two from the outer diameter R, that is, r = R - 2L. The thickness L of the support 10 refers to the length of the part where the thickness in the radial direction of the support 10 is the greatest as illustrated in Fig. 2. In other words, there is the concavity and convexity on the outer circumferential surface and inner circumferential surface of the support 10, the convex part of the outer circumferential surface of the support and the convex part of the inner circumferential surface of the support are connected in the radial direction (direction passing through the center line), and the length thereof is adopted as the thickness L. In the invention, the value of inner diameter r of the support is defined as the inner diameter value of the hollow porous membrane. In the actual measurement, a flake is prepared from a sample of the hollow porous membrane and the optical image of the cross section of the flake is measured using a projector. The part where the thickness value of the support is the greatest in this cross-sectional image is randomly measured at least at three locations and the average value thereof is adopted as the thickness L.

The value of inner diameter r is preferably 0.6 mm or more since a decrease in flow rate due to the pressure loss caused when the treated water flows through the inner side of the support occurs when the inner diameter r of the support is smaller. The upper limit value of the inner diameter r is not particularly limited in the range of less than the outer diameter as long as the effect of the invention is exhibited, but it is preferably 1.8 mm or less since the membrane is easily crushed when the inner diameter is relatively too great compared with the outer diameter. In other words, the value of inner diameter r is preferably from 0.6 to 1.8 mm and more preferably from 0.65 to 1.6 mm.

In addition, the value of the ratio of the inner diameter r of the support to the value of outer diameter D of the hollow porous membrane, that is, the diameter ratio (r/D) of the hollow porous membrane (hereinafter, simply referred to as the diameter ratio) is preferably from 0.5 to 0.9 and more preferably from 0.55 to 0.85. It is not preferable that the diameter ratio be smaller than 0.5 since the inner diameter value of the support is small and thus the flow rate decreases by the pressure loss caused when the treated water flows through the inner side of the support. In addition, it is not preferable that the diameter ratio be greater than 0.9 since the strength against crushing decreases. In other words, it is preferable that the hollow porous membrane have a diameter ratio of from 0.5 to 0.9 since the flow rate of the treated water does not decrease and the strength against crushing does not decrease. Here, the "crushing" means a state that it is impossible to hold the circular shape of the cross section and the resistance of flow channel increases when the liquid to be treated flows through the hollow portion of the hollow fiber membrane.

Other aspects of the invention are as follows.

<1> A hollow porous membrane having a porous membrane layer and a support, in which the porous membrane layer is composed of a thermoplastic resin, the support is a support obtained by processing a yarn having a stretch elongation rate of 1.0% or less into a tubular shape, an inner diameter value of the hollow porous membrane is from 0.6 to 1.8 mm, and the outer diameter value of the hollow porous membrane is from 1.2 to 2.0 mm;

<2> The hollow porous membrane according to <1>, in which a membrane thickness of the porous membrane layer is from 30 to 200 $\mu$m;

<3> The hollow porous membrane according to <1> or <2>, in which the yarn is at least one fiber selected from the group consisting of a synthetic fiber, a semi-synthetic fiber, a regenerated fiber, and a natural fiber;

<4> The hollow porous membrane according to <1> or <2>, in which the yarn is at least one fiber selected from the group consisting of a polyester-based fiber, an acrylic fiber, a polyvinyl alcohol-based fiber, a polyamide-based fiber, and a polyolefin-based fiber;

<5> The hollow porous membrane according to any one of <1> to <4>, in which the thermoplastic resin is at least one resin selected from the group consisting of polyvinylidene fluoride, polysulfone, polyacrylonitrile, polyvinylpyrrolidone, and polyethylene glycol; and

<6> The hollow porous membrane according to any one of <1> to <5>, in which the porous membrane layer is a composite porous membrane layer.

<Method of producing support>

Hereinafter, an example of the specific method of producing the support of the invention will be described.

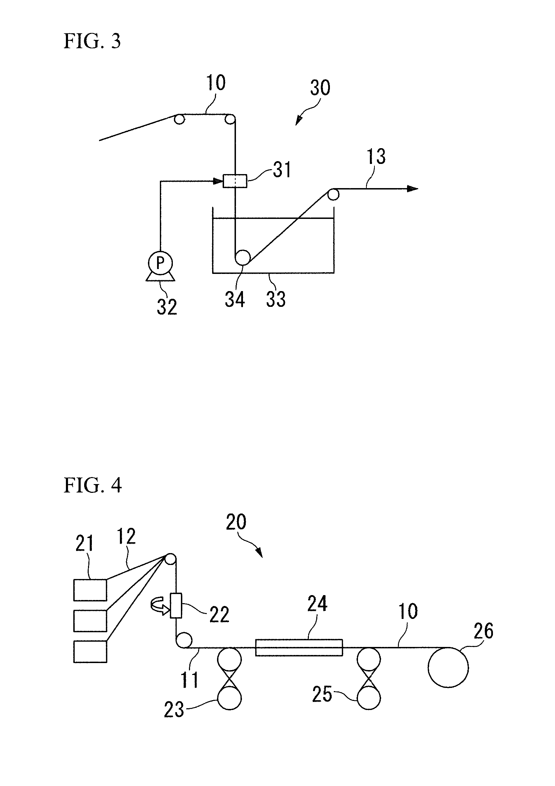

Fig. 4 is a schematic block diagram illustrating an example of the support producing apparatus used in the production of the support 10. A support producing apparatus 20 is furnished with a plurality of bobbins 21, a circular knitting machine 22 to circular knit a yarn 12 having a stretch elongation rate of 1.0% or less which is drawn from the bobbin 21, a string supply device 23 to pull a cylindrical braid 11 knitted by the circular knitting machine 22 with a constant tension, a die 24 to heat treat the cylindrical braid 11, a withdrawing device 25 to withdraw a support 10 obtained by heat treating the cylindrical braid 11, and a winder 26 to wind the support 10 onto the bobbin.

The circular knitting machine 22 is configured to have a rotatable cylindrical cylinder, a spindle which is disposed inside the cylinder and does not rotate, and a plurality of latch needles disposed on the outer circumference of the spindle. The outer diameter R, the inner diameter r, and the number and size of the stitch of the cylindrical braid 11 is determined by the form or fineness of the yarn as described above but it also depends on the number of latch needle and the diameter of the circumference of the spindle in which the latch needle is disposed.

In addition, in one aspect of the invention, it is preferable that a yarn of multifilament having a fineness of from 56 to 333 dtex be knitted under the conditions described in step (I) to be described below and heat treated at a temperature equal to or lower than the melting temperature of the yarn 12 having a stretch elongation rate of 1.0% or less as described in step (II) to be described below in order to adjust the outer diameter value and inner diameter value of the cylindrical braid 11 to the preferred outer diameter value and inner diameter value of the support 10 described above.

The die 24 includes a body consisting of a block, plate or the like which is made of a metal and a heating means. Examples of the heating means may include a band heater and an aluminum cast-in heater. A through hole through which the cylindrical braid 11 passes is formed on the body of the die 24.

Examples of the string supply device 23 and the withdrawing device 25 may include the Nelson roll, a nip roll, and a calender roll. The Nelson roll or the calender roll is preferable since there is a risk that the cylindrical braid 11 is crushed by the nip roll.

Hereinafter, an example of the method of producing the support 10 using the support producing apparatus 20 will be described.

The support 10 is produced by the production method having the following step (I) and the following step (II).

Step (I): a step of knitting the cylindrical braid 11 by circular knitting the yarn 12 having a stretch elongation rate of 1.0% or less.

Step (II): a step of heat treating the above cylindrical braid 11 at a temperature equal to or lower than the melting temperature of the yarn 12 having a stretch elongation rate of 1.0% or less.

Step (I):

The cylindrical braid 11 is knitted using the circular knitting machine 22.

The braiding speed is slightly changed depending on the shape of the cylindrical braid 11 but can be determined by the rotational speed of the cylinder. The rotational speed of cylinder can be set to from 1 to 4000 rpm and is preferably from 100 to 3000 rpm in terms of being able to stably knit. The braiding speed at this time is approximately from 6 to 200 m/hr.

Step (II):

The cylindrical braid 11 exhibits elasticity due to its structure. Hence, it is preferable to subject the cylindrical braid 11 to the heat treatment in order to suppress a change in the outer diameter of the support caused by the stretch elongation of the cylindrical braid 11. The elasticity of the cylindrical braid 11 is suppressed and the cylindrical braid 11 is hardly crushed by performing the heat treatment of the cylindrical braid 11. The heat treatment of the cylindrical braid 11 is performed using the die 24. The cylindrical braid 11 is heat-treated as it passes through the die 24 so as to cause the thermal shrinkage, and the elasticity is suppressed as a result. Furthermore, the cylindrical braid 11 is hardly crushed as the stitch is dense.

The temperature t (°C) for heat treatment is required to be set to equal to or lower than the melting temperature of the yarn 12 having a stretch elongation rate of 1.0% or less and is preferably a temperature t (°C) within the range represented by the following Equation (1).

$$\text{Tm} - 80°C \leq t < \text{Tm} \cdots (1)$$

(where, Tm is the melting temperature (°C) of the material of the yarn 12 having a stretch elongation rate of 1.0% or less.)

The temperature t is preferably from 180 to 250°C and more preferably from 190 to 230°C in a case in which the material of the non-crimped yarn 12 is a polyester-based fiber.

Meanwhile, in Fig. 4, there are three bobbins 21, but the bobbin may be one or four or more. In addition, the yarn 12 having a stretch elongation rate of 1.0% or less may be supplied from a plurality of bobbins and then doubled. It is possible to supply a non-crimped yarn having the desired fineness and the desired form by doubling. The properties of the cylindrical braid 11 may be changed by doubling non-crimped yarns having different properties such as heat shrinkability even though the kind of the non-crimped yarns is the same or by doubling non-crimped yarns of different kinds.

In addition, the string supply device 23 may not be installed in a case in which the thermal shrinkage rate of the yarn 12 having a stretch elongation rate of 1.0% or less is small. In this case, a dancer roll or the like is disposed between the circular knitting machine 22 and the die 24 so that the tension may be constantly held by the thermal shrinkage of the cylindrical braid 11.

<Method of producing hollow porous membrane>

The hollow porous membrane of the invention is produced, for example, by the production method having the following steps (1) to (5).

(1) A step of coating the membrane forming solution on the outer circumferential surface of the support.
(2) A step of obtaining the hollow porous membrane precursor by coagulating the membrane forming solution after step (1) so as to form the porous membrane layer.
(3) A step of washing the hollow porous membrane precursor.
(4) A step of obtaining the hollow porous membrane by drying the hollow porous membrane precursor.
(5) A step of winding the hollow porous membrane obtained in (4).

Fig. 3 is a schematic block diagram illustrating an example of the hollow porous membrane producing apparatus used in steps (1) and (2).

A hollow porous membrane producing apparatus 30 is furnished with a double pipe spinning nozzle 31 to continuously coat the membrane forming solution on the support 10 which is continuously supplied from the unwinding device (not illustrated), a stock solution supply device 32 to supply the membrane forming solution to the double pipe spinning nozzle 31, a coagulation bath 33 containing the coagulating liquid to coagulate the membrane forming solution coated on the support 10, and a guide roll 34 to continuously introduce the support 10 coated with the membrane forming solution into the coagulation bath 33.

Step (1):

A pipe line through which the support 10 passes is formed in the center of the double pipe spinning nozzle 31. In the middle of the pipe line, a slit-shaped discharge port for membrane forming solution is formed in the circumferential direction of the pipe line and thus the pipe line has a structure to discharge the membrane forming solution. The first membrane forming solution is supplied from the stock solution supply device 32 in a constant amount when the support 10 passes through the pipe line and the first membrane forming solution is coated on the outer circumferential surface of the support 10 so as to form a porous membrane layer having a predetermined membrane thickness.

The inner diameter of the pipe line of the double pipe spinning nozzle 31 is slightly greater than the outer diameter of the support 10, and there is a fixed gap between the inner circumferential surface of the pipe line of the double pipe spinning nozzle 31 and the support 10. The gap is appropriately changed by the thickness of the porous membrane layer, the viscosity of the membrane forming solution, the outer diameter or the travelling speed of the support 10 and the like.

The membrane forming solution is a liquid containing a resin which is a material of the porous membrane layer described above and a solvent. In other words, the membrane forming solution of the hollow porous membrane of the invention in which the porous membrane layer is formed of a thermoplastic resin contains at least a thermoplastic resin and a solvent.

Examples of the solvent may include a water-soluble solvent such as N,N-dimethylformamide, N,N-dimethylacetamide, dimethyl sulfoxide, and N-methyl-2-pyrrolidone, and N,N-dimethylacetamide or N-methyl-2-pyrrolidone is preferable in terms that a porous membrane layer exhibiting high water permeability can be formed. A hydrophilic polymer such as polyvinylpyrrolidone may be added to the membrane forming solution as an auxiliary for micropore formation.

The concentration of the thermoplastic resin in the total mass of the membrane forming solution is preferably from 5 to 50% by mass and more preferably from 10 to 40% by mass. It is possible to form a suitable porous membrane structure, that is, a structure in which the connection between the pores is favorable, the water permeability is high, and favorable fractionation performance is exhibited when the concentration of the thermoplastic resin in the total mass of the membrane forming solution is from 5 to 50% by mass. In addition, in the case of adding an auxiliary for micropore formation to the membrane forming solution, the addition amount thereof is preferably from 0 to 50% by mass and more preferably from 5 to 40% by mass with respect to the total mass of the membrane forming solution.

Step (2):

The first membrane forming solution coated on the outer circumferential surface of the support 10 is brought into contact with the coagulating liquid in the coagulation bath 33 and thus the first membrane forming solution is coagulated to form the first porous membrane layer, whereby a hollow porous membrane precursor 13 is obtained.

Meanwhile, it is also possible to form the hollow porous membrane precursor 13 having the second and third porous membrane layers formed of the second and third membrane forming solutions by repeating steps (1) and (2) between step (2) and step (3). In one aspect of the hollow porous membrane of the invention, it is preferable to have a composite porous membrane layer formed by laminating two or more layers of the porous membrane layer on the outer circumferential surface of the support 10.

An aqueous solution containing the same solvent as the solvent of the membrane forming solution is preferable as the coagulating liquid. The concentration of solvent in the coagulating liquid is preferably from 1 to 50% by mass and more preferably from 5 to 45% by mass with respect to the coagulating liquid (100% by mass) in a case in which the solvent of the membrane forming solution is, for example, N,N-dimethylacetamide or N-methyl-2-pyrrolidone. It is preferable that the concentration of the solvent in the total mass of the coagulating liquid be from 1 to 50% by mass since it is possible to form a suitable porous membrane structure, that is, a structure in which the connection between the pores is favorable, the water permeability is high, and favorable fractionation performance is exhibited.

In addition, the temperature of the coagulating liquid is preferably from 10 to 90°C and more preferably from 15 to 85°C. It is preferable that the temperature of the coagulating liquid be from 10 to 90°C since it is possible to form a suitable porous membrane structure, that is, a structure in which the connection between the pores is favorable, the water permeability is high, and favorable fractionation performance is exhibited.

Step (3):

It is a step, for example, in which the hollow porous membrane precursor obtained in (2) is washed in water or hot water to remove the solvent, subsequently washed with a chemical liquid such as hypochlorous acid, and further washed in water or hot water to remove the chemical liquid. Here, the hot water refers to water that is adjusted to a temperature of 60°C or higher.

Steps (4) and (5):

The above hollow porous membrane precursor is dried at 60°C or higher and less than 110°C for 1 minute or longer and shorter than 1 hour so as to obtain the hollow porous membrane, and then the hollow porous membrane is wound onto a bobbin, a skein or the like.

It is preferable that the temperature when drying the hollow porous membrane precursor be 60°C or higher and less than 110°C since the efficiency of drying the hollow porous membrane precursor is favorable and the thermoplastic change due to the contact with the roller or the like during the drying step does not occur. In addition, it is preferable that the drying time be 1 minute or longer and shorter than 1 hour since the production efficiency does not decrease.

The hollow porous membrane produced in this manner has a support obtained by processing the non-crimped yarn (straight yarn) into a tubular shape, and thus excellent mechanical properties are exhibited and also the pressure loss due to the resistance in pipe is suppressed even when the outer diameter value of the hollow porous membrane is as small as from 1.0 to 2.0 mm and favorable water permeability can be maintained. Furthermore, it is possible to increase the rigidity of the support 10 and to further improve the fracture stress of the hollow porous membrane by subjecting the cylindrical braid 11 to the heat treatment.

In addition, in the above description, the so-called non-solvent induced phase separation method has been exemplified and described as the method of forming the porous membrane layer, but, for example, a known thermally induced phase separation method may be employed. Here, the general thermally induced phase separation method is a method in which a polymer and a poor solvent which is insoluble at room temperature are mixed at a high temperature to prepare a uniform polymer solution, the temperature thereof is then lowered so as to cause the phase separation and the coagulation thereof is performed to form a porous structure.

EXAMPLES

The invention will be specifically described with reference to the following Examples.

(Outer diameter of hollow porous membrane and support)

With regard to the hollow porous membrane having a support, the outer diameter D of the hollow porous membrane and the outer diameter R of the support were measured by the following method.

A sample of the hollow porous membrane having a support was cut to be about 10 cm. Several pieces of the sample after cutting were bundled, and the entire sample was covered with a polyurethane resin. The polyurethane resin was allowed to enter even the hollow portion of the support. A flake having a thickness (corresponding to the length in the longitudinal direction of the hollow fiber membrane) of about 0.5 mm was cut using a razor blade after the polyurethane resin was cured. Next, the optical image of the cross section of the cut flake was projected on the screen at a magnification of 100 times (objective lens) using a projector (PROFILE PROJECTOR V-12 manufactured by Nikon Corporation), the outer diameter D of the hollow porous membrane and the outer diameter R of the support of the sample were read from the projected image. This measurement was performed three times, and the average values of the measured numerical values were adopted as the outer diameter D1 of the hollow porous membrane and the outer diameter R1 of the support.

(Inner diameter of support)

A flake having a thickness of about 0.5 mm was fabricated in the same manner as in the measurement of the outer diameter of the hollow porous membrane, and the optical image of the cross section of the flake was projected using a projector. The measurement was performed for the part where the thickness value was the greatest in the cross-sectional image of the sample. This measurement was performed three times, and the average value of the measured numerical values was adopted as the thickness L. The value obtained by subtracting the thickness L calculated in this manner from the outer diameter R1 was adopted as the inner diameter r.

(Water permeability by module of hollow porous membrane)

The water permeability of the hollow porous membrane was measured by the following method.

The sample of the hollow porous membrane to be measured was cut to be 165 cm, and the hollow portion of one end surface was sealed with a polyurethane resin. Next, the pressure reduction was performed for 5 minutes or longer in ethanol and then the sample was immersed in pure water so as to replace ethanol with pure water.

Pure water (25°C) was introduced into a container, the other end of the sample was linked to a tube pump, and the amount (ml) of pure water discharged from the sample was measured for one minute at a suction pressure of about 20 kPa. This measurement was performed three times and the average value thereof was determined. The value obtained by dividing this numerical value by the surface area of the sample and converting to the pressure of 1 MPa was adopted as the water permeability by module ($m^3/m^2/hr/MPa$) of the hollow porous membrane at 25°C.

(Tensile fracture stress of hollow porous membrane)

The tensile fracture stress of the hollow porous membrane was measured using a Tensilon type tensile tester (UCT-1T type manufactured by A & D Company, Limited). A sample of the hollow porous membrane to be measured was gripped by the chuck portion of the tester so as to have a length of the membrane of 10 cm, the extension thereof was performed in this state at a rate of 100 mm/min, and the load (N) when the hollow porous membrane was fractured was measured. This measurement was performed five times, and the average value of the tensile fracture strength (N/fil) of one (1 filter) hollow porous membrane was determined. In addition, the tensile fracture stress (MPa) was calculated by dividing the tensile fracture strength by the cross-sectional area of the hollow porous membrane.

(Packing quantity of membrane of hollow porous membrane)

The sample of hollow porous membrane was cut to be 200 cm, arranged side by side, and stacked into a sheet, one end of the sheet bundle thus obtained was inserted in a case having a length of 1110 mm, a width of 16 mm, and a depth of 68 mm, and a urethane resin was then poured into the end portion thereof and cured. Thereafter, the other end was inserted in the case, and the end portion was cured with a urethane resin in the same manner as the previous process while adjusting the length of the membrane part which was not buried in the urethane to be 1830 mm. At this time, the membrane was housed after adjusting the number of membrane such that the area occupied by the membrane was 50% with respect to the area of the housing portion of the case. The surface area of the membrane part calculated at this time was adopted as the packing quantity of membrane ($m^2$) of the hollow porous membrane. In addition, the packing quantity of membrane of the hollow porous membrane was calculated by the following Equation.

$$\text{Number of membrane when packing rate is 50\%} = (\text{area of housing portion of}$$

$$\text{case} \times 0.5)/\text{cross-sectional area of hollow porous membrane}$$

$$\text{Packing quantity of membrane (m}^2) = \text{outer diameter of hollow porous}$$

$$\text{membrane} \times \text{number of membrane of hollow porous membrane} \times \text{length of membrane}$$

$$\text{except part buried in urethane resin}$$

(Example 1)

In the following manner, a hollow porous membrane was produced in which two layers of the porous membrane layer composed of a thermoplastic resin were formed on the outer circumferential surface of the braid support (a) obtained by circular knitting a non-crimped yarn into a cylindrical shape and subjecting a heat treatment.

Meanwhile, as the braid support (a), a support obtained by circular knitting a multifilament of a polyester fiber (made of PET, fineness of 111 dtex) which had a stretch elongation rate of 0.3% and was not subjected to the crimping process into a cylindrical shape using the support producing apparatus illustrated in Fig. 4, and heat treating at 190°C was used. The outer diameter of the used braid support (a) was 1.38 mm and the inner diameter thereof was 0.84 mm.

(Preparation of first membrane forming solution)

The first membrane forming solution was obtained by stirring and mixing 16.2% by mass of polyvinylidene fluoride P1 (mass average molecular weight (hereinafter, abbreviated as Mw): $6.8 \times 10^5$), 11.4% by mass of polyvinylpyrrolidone M1 (Mw: $4.0 \times 10^4$), and 72.4% by mass of N-methylpyrrolidone of the solvent at 60°C.

(Preparation of second membrane forming solution)

The second membrane forming solution was obtained by stirring and mixing 18.3% by mass of polyvinylidene fluoride P4 (Mw: $7.2 \times 10^5$), 8.3% by mass of polyvinylpyrrolidone M1, and 73.4% by mass of N-methylpyrrolidone of the solvent at 60°C.

(Production of hollow porous membrane)

The hollow porous membrane was produced using the producing apparatus illustrated in Fig. 3.

The first membrane forming solution was coated on the outer circumferential surface of the braid support (a) by allowing the braid support (a) to pass through the pipe line in the center of the double pipe spinning nozzle as well as supplying the first membrane forming solution through the outer side thereof, and then the first membrane forming solution was coagulated by introducing the coated braid support (a) into the first coagulation bath filled with an aqueous solution of N-methylpyrrolidone (coagulating liquid) having a solvent concentration of 30% by weight and a temperature of 23°C, thereby forming the first porous membrane layer.

Subsequently, the second membrane forming solution was coated on the first porous membrane layer in the same manner as the case of the first membrane forming solution, and then the second membrane forming solution was coagulated by introducing the coated braid support (a) into the second coagulation bath filled with an aqueous solution of N-methylpyrrolidone (coagulating liquid) having a solvent concentration of 30% by weight and a temperature of 61 °C, thereby forming the second porous membrane layer on the first porous membrane layer.

A series of steps were repeated three times that this was immersed in the sodium hypochlorite solution which has a concentration of 13% by mass and is at room temperature (25°C), then allowed to stay in a water vapor atmosphere at 100°C, and further immersed in hot water at 90°C, whereby polyvinylpyrrolidone remaining in the membrane was washed and removed.

After the washing step, the moisture remaining in the membrane was entirely evaporated by drying for 10 minutes in a drying furnace heated at 105°C, thereby obtaining a hollow porous membrane which had an outer diameter of 1.45 mm, a diameter ratio of 0.58, a water permeability by module of 4.3 $m^3/m^2/hr/MPa$, a tensile fracture strength of 98 N/fil, and a tensile fracture stress of 89.3 MPa.

The hollow porous membrane thus produced was housed in the case such that the number of membrane was adjusted to have a packing rate of 50%. The packing quantity of membrane of the hollow porous membrane at this time was 44.8 m$^2$.

(Example 2)

The braid support (b) was produced by entirely the same operation as in Example 1 except that the yarn used in the support in the support was changed to a multifilament of a polyester fiber (made of PET, fineness of 167 dtex) which had a stretch elongation rate of 0.3% and was not subjected to the crimping process. The outer diameter of this braid support (b) was 1.47 mm and the inner diameter thereof was 0.91 mm.

(Preparation of first membrane forming solution)

The first membrane forming solution was obtained by stirring and mixing 12.9% by mass of polyvinylidene fluoride P1, 11.9% by mass of polyvinylpyrrolidone M1, and 75.2% by mass of N-methylpyrrolidone of the solvent at 60°C.

(Preparation of second membrane forming solution)

The second membrane forming solution was obtained by stirring and mixing 15.2% by mass of polyvinylidene fluoride P4, 8.6% by mass of polyvinylpyrrolidone M1, and 76.2% by mass of N-methylpyrrolidone of the solvent at 60°C.

(Production of hollow porous membrane)

The hollow porous membrane was produced by entirely the same operation as in Example 1 except that the first and second membrane forming solutions were changed to those described above.
The hollow porous membrane thus obtained had an outer diameter of 1.58 mm, a diameter ratio of 0.58, a water permeability by module of 5.4 m$^3$/m$^2$/hr/MPa, a tensile fracture strength of 133 N/fil, and a tensile fracture stress of 101.5 MPa.
The hollow porous membrane thus produced was housed in the case such that the number of membrane was adjusted to have a packing rate of 50%. The packing quantity of membrane of the hollow porous membrane at this time was 41.1 m$^2$.

(Example 3)

As the support, the same braid support (b) as that in Example 2 was used.

(Preparation of first membrane forming solution)

The first membrane forming solution was obtained by stirring and mixing 11.8% by mass of polyvinylidene fluoride P2 of (Mw: $5.2 \times 10^5$), 11.8% by mass of polyvinylidene fluoride P3 of (Mw: $2.2 \times 10^5$), 11.8% by mass of polyvinylpyrrolidone M2 (Mw: $9.0 \times 10^4$), and 64.6% by mass of N,N-dimethylacetamide of the solvent at 60°C.

(Preparation of second membrane forming solution)

The second membrane forming solution was obtained by stirring and mixing 19.2% by mass of polyvinylidene fluoride P2, 10.1% by mass of polyvinylpyrrolidone M2, and 70.7% by mass of N,N-dimethylacetamide of the solvent at 60°C.

(Production of hollow porous membrane)

The hollow porous membrane was produced using the producing apparatus illustrated in Fig. 3.
The first membrane forming solution and the second membrane forming solution were coated on the outer circumferential surface of this braid support (b) by allowing the braid support (b) to pass through the pipe line in the center of the triple pipe spinning nozzle as well as supplying the first membrane forming solution through the pipe line on the outer side thereof and the second membrane forming solution through the outermost layer and then coagulated by introducing the coated braid support (b) into the first coagulation bath filled with an aqueous solution of N,N-dimethylacetamide (coagulating liquid) having a solvent concentration of 8% by weight and a temperature of 70°C, thereby forming the first and second porous membranes.
A series of steps were repeated three times that this was immersed in the sodium hypochlorite solution which has a concentration of 13% by mass and is at room temperature (25°C), then allowed to stay in a water vapor atmosphere at 100°C, and further immersed in hot water at 90°C, whereby polyvinylpyrrolidone remaining in the membrane was washed and removed.

After the washing step, the moisture remaining in the membrane was entirely evaporated by drying for 10 minutes in a drying furnace heated at 105°C, thereby obtaining a hollow porous membrane which had an outer diameter of 1.67 mm, a diameter ratio of 0.54, a water permeability by module of 7.2 m$^3$/m$^2$/hr/MPa, a tensile fracture strength of 133 N/fil, and a tensile fracture stress of 86.4 MPa.

The hollow porous membrane thus produced was housed in the case such that the number of membrane was adjusted to have a packing rate of 50%. The packing quantity of membrane of the hollow porous membrane at this time was 38.9 m$^2$.

(Example 4)

The braid support (g) was produced by entirely the same operation as in Example 1 except that a multifilament of a polyester fiber (made of PET, fineness of 111 dtex) which had a stretch elongation rate of 0.3% and was not subjected to the crimping process was circular knitted into a cylindrical shape and heat treated at 180°C. The outer diameter of this braid support (g) was 1.16 mm and the inner diameter thereof was 0.70 mm.

The hollow porous membrane was produced by entirely the same operation as in Example 2 except that the braid support (g) was used. The hollow porous membrane thus obtained had an outer diameter of 1.27 mm, a diameter ratio of 0.55, a water permeability by module of 2.3 m$^3$/m$^2$/hr/MPa, a tensile fracture strength of 74 N/fil, and a tensile fracture stress of 83.9 MPa.

The hollow porous membrane thus produced was housed in the case such that the number of membrane was adjusted to have a packing rate of 50%. The packing quantity of membrane of the hollow porous membrane at this time was 51.2 m$^2$.

(Example 5)

The hollow porous membrane was produced by entirely the same operation as in Example 3 except that the braid support (g) was used. The hollow porous membrane thus obtained had an outer diameter of 1.30 mm, a diameter ratio of 0.54, a water permeability by module of 6.7 m$^3$/m$^2$/hr/MPa, a tensile fracture strength of 74 N/fil, and a tensile fracture stress of 78.5 MPa.

The hollow porous membrane thus produced was housed in the case such that the number of membrane was adjusted to have a packing rate of 50%. The packing quantity of membrane of the hollow porous membrane at this time was 50.0 m$^2$.

(Example 6)

The braid support (h) was produced by entirely the same operation as in Example 2 except that the yarn used in the support was changed to a multifilament of a polyester fiber (made of PET, fineness of 167 dtex) which had a stretch elongation rate of 0.3% and was not subjected to the crimping process and the multifilament was circular knitted into a cylindrical shape and heat treated at 180°C. The outer diameter of this braid support (h) was 1.87 mm and the inner diameter thereof was 1.27 mm.

The hollow porous membrane was produced by entirely the same operation as in Example 5 except that the braid support (h) was used. The hollow porous membrane thus obtained had an outer diameter of 1.90 mm, a diameter ratio of 0.67, a water permeability by module of 12.5 m$^3$/m$^2$/hr/MPa, a tensile fracture strength of 137 N/fil, and a tensile fracture stress of 87.3 MPa.

The hollow porous membrane thus produced was housed in the case such that the number of membrane was adjusted to have a packing rate of 50%. The packing quantity of membrane of the hollow porous membrane at this time was 34.2 m$^2$.

(Example 7)

The braid support (i) was produced by entirely the same operation as in Example 1 except that the yarn used in the support was changed to a multifilament of a polyester fiber (made of PET, fineness of 194 dtex) which had a stretch elongation rate of 0.2% and was not subjected to the crimping process and the heat treatment was performed at 180°C. The outer diameter of this braid support (i) was 1.96 mm and the inner diameter thereof was 1.37 mm.

The hollow porous membrane was produced by entirely the same operation as in Example 6 except that the braid support (i) was used.

The hollow porous membrane thus obtained had an outer diameter of 1.97 mm, a diameter ratio of 0.70, a water permeability by module of 12.6 $m^3/m^2$/hr/MPa, a tensile fracture strength of 153 N/fil, and a tensile fracture stress of 97.2 MPa.

The hollow porous membrane thus produced was housed in the case such that the number of membrane was adjusted to have a packing rate of 50%. The packing quantity of membrane of the hollow porous membrane at this time was 33.0 $m^2$.

(Example 8)

The braid support (f) was produced by entirely the same operation as in Example 1 except that the yarn used in the support was changed to a multifilament of a polyester fiber (made of PET, fineness of 83 dtex) which had a stretch elongation rate of 0.3% and was not subjected to the crimping process and the heat treatment was performed at 200°C. The outer diameter of this braid support (f) was 1.00 mm and the inner diameter thereof was 0.60 mm.

The hollow porous membrane was produced by entirely the same operation as in Example 4 except that the braid support (f) was used.

The hollow porous membrane thus obtained had an outer diameter of 1.11 mm, a diameter ratio of 0.54, a water permeability by module of 1.9 $m^3/m^2$/hr/MPa, a tensile fracture strength of 56 N/fil, and a tensile fracture stress of 81.8 MPa.

The hollow porous membrane thus produced was housed in the case such that the number of membrane was adjusted to have a packing rate of 50%. The packing quantity of membrane of the hollow porous membrane at this time was 58.6 $m^2$.

(Comparative Example 1)

The braid support (c) was produced by entirely the same operation as in Example 1 except that the yarn used in the support was changed to a multifilament of a polyester fiber (made of PET, fineness of 167 dtex) which had a stretch elongation rate of 1.6% and was subjected to the crimping process. The outer diameter of this braid support (c) was 1.47 mm and the inner diameter thereof was 0.79 mm.

(Preparation of first membrane forming solution)

The first membrane forming solution was obtained by stirring and mixing 19.3% by mass of polyvinylidene fluoride P1, 11.0% by mass of polyvinylpyrrolidone M1, and 69.7% by mass of N-methylpyrrolidone of the solvent at 60°C.

(Production of hollow porous membrane)

The hollow porous membrane was produced by entirely the same operation as in Example 1 except that the first membrane forming solution was changed to one described above.

The hollow porous membrane thus obtained had an outer diameter of 1.67 mm, a diameter ratio of 0.47, a water permeability by module of 1.9 $m^3/m^2$/hr/MPa, a tensile fracture strength of 117 N/fil, and a tensile fracture stress of 68.8 MPa.

The hollow porous membrane thus produced was housed in the case such that the number of membrane was adjusted to have a packing rate of 50%. The packing quantity of membrane of the hollow porous membrane at this time was 38.9 $m^2$.

(Comparative Example 2)

The braid support (d) was produced by entirely the same operation as in Example 1 except that the yarn used in the support was changed to a multifilament of a polyester fiber (made of PET, fineness of 417 dtex) which had a stretch elongation rate of 2.3% and was subjected to the crimping process and the heat treatment was performed at 210°C. The outer diameter of this braid support (d) was 2.60 mm and the inner diameter thereof was 1.67 mm.

(Preparation of first membrane forming solution)

The first membrane forming solution was obtained by stirring and mixing 11.8% by mass of polyvinylidene fluoride P2, 11.8% by mass of polyvinylidene fluoride P3, 11.8% by mass of polyvinylpyrrolidone M2, and 64.6% by mass of N,N-dimethylacetamide of the solvent at 60°C.

(Preparation of second membrane forming solution)

The second membrane forming solution was obtained by stirring and mixing 19.2% by mass of polyvinylidene fluoride P2, 10.1% by mass of polyvinylpyrrolidone M2, and 70.7% by mass of N,N-dimethylacetamide of the solvent at 60°C.

(Production of hollow porous membrane)

The hollow porous membrane was produced using the producing apparatus illustrated in Fig. 3.

The first membrane forming solution and the second membrane forming solution were coated on the outer circumferential surface of this braid support (d) by allowing the braid support (d) to pass through the pipe line in the center of the triple pipe spinning nozzle as well as supplying the first membrane forming solution through the pipe line on the outer side thereof and the second membrane forming solution through the outermost layer and then coagulated by introducing the coated braid support (b) into the first coagulation bath filled with an aqueous solution of N,N-dimethylacetamide (coagulating liquid) having a solvent concentration of 8% by weight and a temperature of 70°C, thereby forming the first and second porous membranes.

A series of steps were repeated three times that this was immersed in the sodium hypochlorite solution which has a concentration of 13% by mass and is at room temperature (25°C), then allowed to stay in a water vapor atmosphere at 100°C, and further immersed in hot water at 90°C, whereby polyvinylpyrrolidone remaining in the membrane was washed and removed.

After the washing step, the moisture remaining in the membrane was entirely evaporated by drying for 10 minutes in a drying furnace heated at 105°C, thereby obtaining a hollow porous membrane which had an outer diameter of 2.80 mm, a diameter ratio of 0.60, a water permeability by module of 11.6 $m^3/m^2/hr/MPa$, a tensile fracture strength of 270 N/fil, and a tensile fracture stress of 68.1 MPa.

The hollow porous membrane thus produced was housed in the case such that the number of membrane was adjusted to have a packing rate of 50%. The packing quantity of membrane of the hollow porous membrane at this time was 23.2 $m^2$.

(Comparative Example 3)

The braid support (e) was produced by entirely the same operation as in Example 1 except that the yarn used in the support was changed to a multifilament of a polyester fiber (made of PET, fineness of 83 dtex) which had a stretch elongation rate of 1.1% and was subjected to the crimping process and the heat treatment was performed at 200°C. The outer diameter of this braid support (e) was 0.98 mm and the inner diameter thereof was 0.55 mm.

The hollow porous membrane was produced by entirely the same operation as in Example 4 except that the braid support (e) was used.

The hollow porous membrane thus obtained had an outer diameter of 1.07 mm, a diameter ratio of 0.51, a water permeability by module of 1.9 $m^3/m^2/hr/MPa$, a tensile fracture strength of 48 N/fil, and a tensile fracture stress of 72.5 MPa.

The hollow porous membrane thus produced was housed in the case such that the number of membrane was adjusted to have a packing rate of 50%. The packing quantity of membrane of the hollow porous membrane at this time was 60.7 $m^2$.

The composition, outer diameter R1, inner diameter r of the braid supports (a) to (h) are presented in Table 1. In addition, the composition ratios of the membrane forming solutions and the measurement results of outer diameter D1, diameter ratio, water permeability by module, packing quantity of module, tensile fracture strength, and tensile fracture stress of the hollow porous membranes of Examples 1 to 8 and Comparative Examples 1 to 3 are presented in Tables 2 and 3.

[Table 1]

| | | Braid support (a) | Braid support (b) | Braid support (c) | Braid support (d) | Braid support (e) | Braid support (f) | Braid support (g) | Braid support (h) | Braid support (i) |
|---|---|---|---|---|---|---|---|---|---|---|
| Yarn | Stretch elongation rate (%) | 0.3 | 0.3 | 1.6 | 2.3 | 1.1 | 0.3 | 0.3 | 0.3 | 0.2 |
| | Form of yarn | Non-crimped yarn | Non-crimped yarn | Crimped yarn | Crimped yarn | Crimped yarn | Non-crimped yarn | Non-crimped yarn | Non-crimped yarn | Non-crimped yarn |
| | Material | Polyester yarn | Polyester yarn | Polyester yarn | Polyester yarn | Polyester yarn | Polyester yarn | Polyester yarn | Polyester yarn | Polyester yarn |
| | fineness (dtex) | 111 | 167 | 167 | 417 | 83 | 83 | 111 | 167 | 194 |
| Processing | Knitting condition | Cylindrical shape | Cylindrical shape | Cylindrical shape | Cylindrical shape | Cylindrical shape | Cylindrical shape | Cylindrical shape | Cylindrical shape | Cylindrical shape |
| | Heat treatment | Presence | Presence | Presence | Presence | Presence | Presence | Presence | Presence | Presence |
| | Temperature for heat treatment (°C) | 190 | 190 | 190 | 210 | 200 | 200 | 180 | 180 | 180 |
| Outer diameter R1 (mm) | | 1.38 | 1.47 | 1.47 | 2.60 | 0.98 | 1.00 | 1.16 | 1.87 | 1.96 |
| Inner diameter r (mm) | | 0.84 | 0.91 | 0.79 | 1.67 | 0.55 | 0.60 | 0.70 | 1.27 | 1.37 |

[Table 2]

| | | Example 1 | Example 2 | Example 3 | Example 4 | Example 5 | Example 6 | Example 7 | Example 8 |
|---|---|---|---|---|---|---|---|---|---|
| Support for hollow porous membrane | | Braid support (a) | Braid support (b) | Braid support (b) | Braid support (g) | Braid support (g) | Braid support (h) | Braid support (i) | Braid support (f) |
| First membrane forming solution | Polyvinylidene fluoride P1 (wt%) | 16.2 | 12.9 | | 12.9 | | | | 12.9 |
| | Polyvinylidene fluoride P2 (wt%) | | | 11.8 | | 11.8 | 11.8 | 11.8 | |
| | Polyvinylidene fluoride P3 (wt%) | | | 11.8 | | 11.8 | 11.8 | 11.8 | |
| | Polyvinylpyrrolidone M1 (wt%) | 11.4 | 11.9 | | 11.9 | | | | 11.9 |
| | Polyvinylpyrrolidone M2 (wt%) | | | 11.8 | | 11.8 | 11.8 | 11.8 | |
| | N-methylpyrrolidone (wt%) | 72.4 | 75.2 | | 75.2 | | | | 75.2 |
| | N,N-dimethylacetamide (wt%) | | | 64.6 | | 64.6 | 64.6 | 64.6 | |
| Second membrane forming solution | Polyvinylidene fluoride P2 (wt%) | | | 19.2 | | 19.2 | 19.2 | 19.2 | |
| | Polyvinylidene fluoride P4 (wt%) | 18.3 | 15.2 | | 15.2 | | | | 15.2 |
| | Polyvinylpyrrolidone M1 (wt%) | 8.3 | 8.6 | | 8.6 | | | | 8.6 |
| | Polyvinylpyrrolidone M2 (wt%) | | | 10.1 | | 10.1 | 10.1 | 10.1 | |
| | N-methylpyrrolidone (wt%) | 73.4 | 76.2 | | 76.2 | | | | 76.2 |
| | N,N-dimethylacetamide (wt%) | | | 70.7 | | 70.7 | 70.7 | 70.7 | |

(continued)

| Support for hollow porous membrane | | Example 1 | Example 2 | Example 3 | Example 4 | Example 5 | Example 6 | Example 7 | Example 8 |
|---|---|---|---|---|---|---|---|---|---|
| | | Braid support (a) | Braid support (b) | Braid support (b) | Braid support (g) | Braid support (g) | Braid support (h) | Braid support (i) | Braid support (f) |
| Physical property values | Outer diameter D1 (mm) | 1.45 | 1.58 | 1.67 | 1.27 | 1.30 | 1.90 | 1.97 | 1.11 |
| | Diameter ratio | 0.58 | 0.58 | 0.54 | 0.55 | 0.54 | 0.67 | 0.70 | 0.54 |
| | Water permeability by module ($m^3/m^2/hr/MPa$) | 4.3 | 5.4 | 7.2 | 2.3 | 6.7 | 12.5 | 12.6 | 1.9 |
| | Packing quantity of membrane ($m^2$) | 44.8 | 41.1 | 38.9 | 51.2 | 50.0 | 34.2 | 33.0 | 58.6 |
| | Tensile fracture strength (N/fil) | 98 | 133 | 133 | 74 | 74 | 137 | 153 | 56 |
| | Tensile fracture stress (MPa) | 89.3 | 101.5 | 86.4 | 83.9 | 78.5 | 87.3 | 97.2 | 81.8 |

[Table 3]

| | | Comparative Example 1 | Comparative Example 2 | Comparative Example 3 |
|---|---|---|---|---|
| Support for hollow porous membrane | | Braid support (c) | Braid support (d) | Braid support (b) |
| First membrane forming solution | Polyvinylidene fluoride P1 (wt%) | 19.3 | | 12.9 |
| | Polyvinylidene fluoride P2 (wt%) | | 11.8 | |
| | Polyvinylidene fluoride P3 (wt%) | | 11.8 | |
| | Polyvinylpyrrolidone M1 (wt%) | 11.0 | | 11.9 |
| | Polyvinylpyrrolidone M2 (wt%) | | 11.8 | |
| | N-methylpyrrolidone (wt%) | 69.7 | | 75.2 |
| | N,N-dimethylacetamide (wt%) | | 64.6 | |
| Second membrane forming solution | Polyvinylidene fluoride P2 (wt%) | | 19.2 | |
| | Polyvinylidene fluoride P4 (wt%) | | | 15.2 |
| | Polyvinylpyrrolidone M1 (wt%) | | | 8.6 |
| | Polyvinylpyrrolidone M2 (wt%) | | 10.1 | |
| | N-methylpyrrolidone (wt%) | | | 76.2 |
| | N,N-dimethylacetamide (wt%) | | 70.7 | |
| Physical property values | Outer diameter D1 (mm) | 1.67 | 2.8 | 1.07 |
| | Diameter ratio | 0.47 | 0.60 | 0.51 |
| | Water permeability by module ($m^3/m^2/hr/MPa$) | 1.9 | 11.6 | 1.9 |
| | Packing quantity of membrane ($m^2$) | 38.9 | 23.2 | 60.7 |
| | Tensile fracture strength (N/fil) | 117 | 270 | 48 |
| | Tensile fracture stress (MPa) | 68.8 | 68.1 | 72.5 |

As presented in Table 2, in the hollow porous membrane of Example 1, the braid support (a) obtained by processing the non-crimped yarn having a stretch elongation rate of 1.0% or less into a tubular shape was used as the support, and thus a favorable water permeability was exhibited although the outer diameter D1 of the hollow porous membrane was a small value of 1.45 mm. Moreover, the tensile fracture strength was also a sufficiently great value to be 98 N/fil. In the same manner, in the hollow porous membranes of Examples 4 and 5 as well, the braid support (g) obtained by processing the non-crimped yarn into a tubular shape was used as the support, and thus a favorable water permeability and a favorable tensile fracture strength were exhibited.

On the other hand, in the hollow porous membrane of Comparative Example 1, the braid support (c) obtained by processing the yarn which was subjected to the crimping process and had a stretch elongation rate of more than 1.0% into a tubular shape was used as the support, and thus it was not able to obtain a sufficient water permeability in a case in which the outer diameter D1 of the hollow porous membrane was as small as 1.67 mm. It is considered that this is because the support obtained by processing the crimped yarn having a stretch elongation rate of more than 1.0% into a tubular shape has a great concavity and convexity in the inner wall of the tube, and thus the pressure loss of inner diameter when the filtered water flows through the inner side of the support increases.

In Comparative Example 2, a crimped yarn having a fineness of 417 dtex was used as the material of the support, and thus the outer diameter R1 of the support increased and it was not able to control the outer diameter D1 of the hollow porous membrane in the range of from 1.0 to 2.0 mm. In addition, the membrane module using the hollow porous membrane of Comparative Example 2 had a great outer diameter D1 of the hollow porous membrane of 2.8 mm, and thus the high integration of module was difficult.

INDUSTRIAL APPLICABILITY

The hollow porous membrane of the invention exhibits sufficient physical strength and favorable water permeability although the outer diameter value thereof is small, and thus can be applied to a module having a long effective length. In addition, a module including the hollow porous membrane of the invention can be highly integrated. Moreover, the hollow porous membrane of the invention is not fractured even when the physical cleaning by aeration is performed, and thus it is possible to provide safe and high-quality treated water and to suitably use the hollow porous membrane as a membrane filter for the precise filtration, the ultrafiltration and the like in the sewage and wastewater treatment or the water purification treatment.

EXPLANATIONS OF LETTERS OR NUMERALS

| | |
|---|---|
| 1 | hollow porous membrane |
| 2 | porous membrane layer |
| 10 | support |
| 11 | cylindrical braid |
| 12 | non-crimped yarn (straight yarn) |
| 13 | hollow porous membrane precursor |
| 20 | support producing apparatus |
| 21 | bobbin |
| 22 | circular knitting machine |
| 23 | string supply device |
| 24 | die |
| 25 | withdrawing device |
| 26 | winder |
| 30 | hollow porous membrane producing apparatus |
| 31 | double pipe spinning nozzle |
| 32 | stock solution supply device |
| 33 | coagulation bath and |
| 34 | guide roll |

**Claims**

1. A hollow porous membrane comprising a porous membrane layer and a support, wherein the porous membrane layer is composed of a thermoplastic resin and the support is a support obtained by processing a yarn having a stretch elongation rate of 1.0% or less into a tubular shape.

2. The hollow porous membrane according to claim 1, wherein an outer diameter value of the hollow porous membrane is 1.2 mm or more and 2.0 mm or less.

3. The hollow porous membrane according to claim 1 or 2, wherein a diameter ratio (inner diameter value/outer diameter value) of the hollow porous membrane is 0.5 or more and 0.9 or less.

4. The hollow porous membrane according to any one of claims 1 to 3, wherein a tensile fracture strength of the hollow porous membrane is 50 N/fil or more.

5. The hollow porous membrane according to any one of claims 1 to 4, wherein a tensile fracture stress of the hollow porous membrane is 50 MPa or more.

6. The hollow porous membrane according to any one of claims 1 to 5, wherein the yarn is a multifilament.

7. The hollow porous membrane according to any one of claims 1 to 6, wherein the yarn is a polyester fiber.

8. The hollow porous membrane according to any one of claims 1 to 7, wherein a fineness of the yarn is from 56 to 333 dtex.

9.  The hollow porous membrane according to any one of claims 1 to 8, wherein the support is a cylindrical braid support formed by knitting the yarn into a tubular shape and further heat treating the yarn knitted into a tubular shape.

10. The hollow porous membrane according to claim 9, wherein an inner diameter of the cylindrical braid support is 0.6 mm or more.

11. The hollow porous membrane according to any one of claims 1 to 10, wherein the thermoplastic resin is polyvinylidene fluoride.

12. The hollow porous membrane according to claim 11, wherein a mass average molecular weight of the polyvinylidene fluoride is from $2.0 \times 10^5$ or more and $1.2 \times 10^6$ or less.

13. The hollow porous membrane according to claim 12, wherein two or more layers of the porous membrane layer are laminated on the support.

14. The hollow porous membrane according to claim 12, wherein the polyvinylidene fluoride is a mixture of two or more kinds of polyvinylidene fluoride having different mass average molecular weights and the porous membrane layer contains the mixture.

15. The hollow porous membrane according to claim 1, wherein a stretch elongation rate of the yarn is 0.7% or less.

16. The hollow porous membrane according to claim 1, wherein a stretch elongation rate of the yarn is 0.4% or less.

FIG. 1

FIG. 2

FIG. 3

FIG. 4

## INTERNATIONAL SEARCH REPORT

| | International application No. |
|---|---|
| | PCT/JP2013/067679 |

**A. CLASSIFICATION OF SUBJECT MATTER**
*B01D69/08*(2006.01)i, *B01D69/10*(2006.01)i, *B01D69/12*(2006.01)i, *B01D71/34* (2006.01)i, *B01D71/48*(2006.01)i, *B32B1/08*(2006.01)i, *B32B5/24*(2006.01)i

According to International Patent Classification (IPC) or to both national classification and IPC

**B. FIELDS SEARCHED**

Minimum documentation searched (classification system followed by classification symbols)
B01D69/08, B01D69/10, B01D69/12, B01D71/34, B01D71/48, B32B1/08, B32B5/24

Documentation searched other than minimum documentation to the extent that such documents are included in the fields searched
Jitsuyo Shinan Koho          1922-1996    Jitsuyo Shinan Toroku Koho    1996-2013
Kokai Jitsuyo Shinan Koho    1971-2013    Toroku Jitsuyo Shinan Koho    1994-2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2009-517200 A (Koron Industries Inc.),<br>30 April 2009 (30.04.2009),<br>paragraph [0013]; comparative example 1<br>& WO 2007/064124 A1 | 1,6,8,15,16<br>1-16 |
| X<br>Y | US 6354444 B1 (ZENON ENVIRONMENTAL INC.),<br>12 March 2002 (12.03.2002),<br>claims; column 5, lines 6 to 10; column 8,<br>line 52 to column 9, line 46; example 1;<br>fig. 4<br>& WO 2000/078437 A1 | 1,2,4-8,<br>11-16<br>4,5 |
| X<br>Y | JP 2008-114180 A (Mitsubishi Rayon Co., Ltd.),<br>22 May 2008 (22.05.2008),<br>claims; paragraphs [0026], [0041], [0044],<br>[0048]; example 1<br>(Family: none) | 1-3,6-16<br>1-16 |

| ☒ Further documents are listed in the continuation of Box C. | ☐ See patent family annex. |
|---|---|

|  |  |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    18 September, 2013 (18.09.13) | Date of mailing of the international search report<br>    01 October, 2013 (01.10.13) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2013/067679 |

C (Continuation).   DOCUMENTS CONSIDERED TO BE RELEVANT

| Category* | Citation of document, with indication, where appropriate, of the relevant passages | Relevant to claim No. |
| --- | --- | --- |
| E,X | JP 2013-128865 A  (Mitsubishi Rayon Co., Ltd.), 04 July 2013 (04.07.2013), claims; paragraph [0013]; example 1 (Family: none) | 1-16 |
| A | JP 2003-311133 A  (Daicel Chemical Industries, Ltd.), 05 November 2003 (05.11.2003), claims (Family: none) | 1-16 |
| A | JP 53-104578 A  (Asahi Chemical Industry Co., Ltd.), 11 September 1978 (11.09.1978), claims (Family: none) | 1-16 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012147478 A
- WO 2009142279 A
- JP 2007083239 A
- JP 2011036848 A

**Non-patent literature cited in the description**

- *The society of Rheology, Japan,* 2000, vol. 28 (3), 99-103